# EUROPÄISCHE PATENTSCHRIFT

(11) **EP 3 155 747 B1**
(45) Veröffentlichungstag und Bekanntmachung des Hinweises auf die Patenterteilung: **09.08.2023**
(21) Anmeldenummer: 15736190.8
(22) Anmeldetag: 10.06.2015
(51) Int. Cl.: H04L 1/00, H04L 1/18

(54) **VORRICHTUNG ZUR BÜNDELUNG MEHRERER INTERNETZUGANGSMEDIEN MIT VORWÄRTSFEHLERKORREKTUR**
DEVICE FOR BUNDLING A PLURALITY OF INTERNET ACCESS MEDIA WITH FORWARD ERROR CORRECTION
DISPOSITIF DE CONCENTRATION DE PLUSIEURS MOYENS D'ACCÈS À INTERNET AVEC AUTOCORRECTION D'ERREURS

(30) Priorität: 10.06.2014 DE 202014004625 U; 10.09.2014 DE 202014007214 U
(43) Veröffentlichungstag der Anmeldung: 19.04.2017
(73) Patentinhaber: Viprinet Europe GmbH, 55411 Bingen am Rhein (DE)
(72) Erfinder: KISSEL, Simon, 55411 Bingen am Rhein (DE)
(74) Vertreter: Grosse Schumacher Knauer von Hirschhausen
(86) Internationale Anmeldenummer: PCT/EP2015/001167
(87) Internationale Veröffentlichungsnummer: WO 2015/188935

(56) Entgegenhaltungen:
- EP-A2- 1 976 202
- US-A1- 2011 093 758
- DONG NGUYEN ET AL: "Internet Media Streaming Using Network Coding and Path Diversity", 2008 IEEE GLOBAL TELECOMMUNICATIONS CONFERENCE : [IEEE GLOBECOM 2008] ; NEW ORLEANS, LOUISIANA, 30 NOVEMBER 2008 - 04 DECEMBER 2008, IEEE, PISCATAWAY, NJ, USA, 30. November 2008 (2008-11-30), Seiten 1-5, XP031370015, ISBN: 978-1-4244-2324-8

## Beschreibung

### GEBIET DER ERFINDUNG

Die Erfindung betrifft eine Vorrichtung nach dem Oberbegriff des Anspruchs 1 sowie eine Anordnung damit nach dem Oberbegriff des Anspruchs 7.

Insbesondere betrifft die Erfindung eine Vorrichtung wie etwa einen Internetzugangsrouter, der mehrere unterschiedliche Internetzugänge zugleich nutzen kann, und dabei die Kapazität der angeschlossenen Leitungen in Summe für den Benutzer zur Verfügung stellt, mit der Besonderheit dass durch eine Vorwärtsfehlerkorrektur auch bei Störungen mit erheblichen Paketverlusten auf einem Anteil der Leitungen aus Benutzersicht alle IP-Pakete Verlust- und Verzögerungsfrei übertragen werden.

### TECHNOLOGISCHER HINTERGRUND

Die Bündelung mehrere unterschiedlicher drahtgebundener oder drahtloser Internetzugangsleitungen zwecks paralleler Datenübertragung und damit Erhöhung der Bandbreite ist z.B. aus US 8,125,989 B2 oder der EP 1 976 202 A2 bekannt. Die darin beschriebenen Verfahren und Vorrichtungen werden durch Inbezugnahme in diese Anmeldung aufgenommen.

Ein typischer Einsatzzweck dieser Technik ist ein in einem Fahrzeug (KFZ, Zug, Flugzeug) installierter Internet-Router, der mehrere verschiedene mobile Internetzugänge kombiniert - z.B. alle Mobilfunkprovider eines Landes. Ein einzelnes Mobilfunknetz wird während der Fahrt immer wieder Aussetzer haben, z.B. wenn der Signalweg zum jeweiligen Mobilfunkmast des Mobilfunkanbieters blockiert oder der Sendemast gestört ist. Aus diesem Grunde ist eine einzelne Mobilfunkleitung für missionskritische Anwendungen, bei denen die zeitnahe und verlustfreie Zustellung von Datenpaketen erforderlich ist (z.B. im Gesundheitswesen) nicht benutzbar.

Bestehende Lösungen zur Bündelung, wie sie aus den eingangs genannten Druckschriften bekannt sind, können zwar die Bandbreiten aller angeschlossenen Internetzugänge gebündelt zur Verfügung stellen. Werden aber bei der Datenübertragung auf einer der Leitungen Pakete verloren, so müssen diese über eine der anderen Leitungen neu übertragen werden. Durch Signallaufzeiten entstehen dadurch Verzögerungen in der Nutzdatenübertragung.

Aus der US 2011/093758 A1 ist eine Vorrichtung zum Bündeln mehrerer Zugangsleitungen zu einer virtuellen Zugangsleitung bekannt, bei welcher Redundanzinformation berechnet und übertragen werden, aus denen sich verlorene Datenpakete wiederherstellen lassen. Dong Nguyen et al. beschreibt in "Internet Media Streaming Using Network Coding and Path Diversity", 2008 IEEE Global Telecommunications Conference : [IEEE GLOBECOM 2008] ; New Orleans; Louisiana, 30 November 2008 - 04 December 2008, IEEE Piscataway, NJ, USA, 30. November 2008 (2008-11-30), Seiten 1-5, XP031370015, ISBN: 978-1-4244-2324-8, Verfahren zum Streamen von Daten über mehrere Netzwerkleitungen.

Der Erfindung liegt daher die Aufgabe zugrunde, Vorrichtungen für eine Datenübertragung über gebündelte Netzwerkzugangsleitungen zu schaffen, die stabiler sind insbesondere gegenüber Paketverlusten auf einer oder mehrerer der Netzwerkzugangsleitungen.

### DARSTELLUNG DER ERFINDUNG

Diese Aufgabe wird durch eine Vorrichtung gemäß Anspruch 1 sowie durch eine Anordnung gemäß Anspruch 7 gelöst.

Durch Nutzung einer Vorwärtsfehlerkorrektur können Aussetzer auf einer oder einigen der Leitungen vollständig ausgeglichen werden, ohne dass Neuübertragungen erforderlich sind. So lassen sich z.B. bei der Kombination von 4 Internet-Zugangsleitungen (drahtlos oder drahtgebunden) Paketverluste von bis zu 25% ausgleichen, ohne dass eine Neuübertragung erforderlich wird.

Weitere Ausführungsformen und Eigenschaften der Erfindung ergeben sich aus der nachfolgenden Beschreibung, den Figuren und den Ansprüchen.

### FIGURENBESCHREIBUNG

Fig. 1 illustriert das der Erfindung zugrunde liegende Prinzip der Bündelung von Internetzugangsleitungen.
Fig. 2 illustriert eine Ausführungsform.
Fig. 3 illustriert das erfindungsgemäße System zur Datenredundanz.

### DETAILLIERTE BESCHREIBUNG VON AUSFÜHRUNGSBEISPIELEN

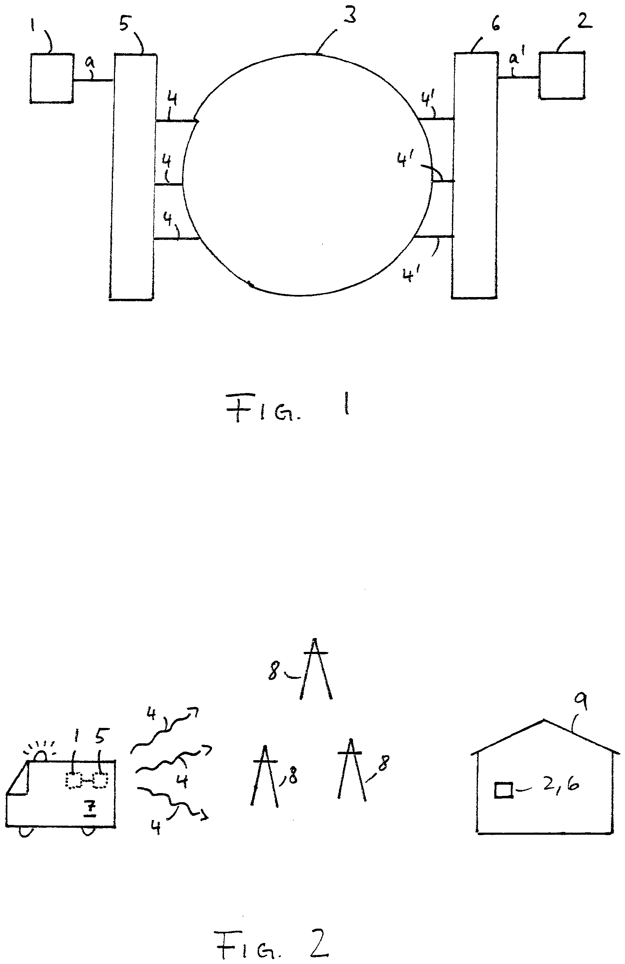

Die in Fig. 1 dargestellte Anordnung zum Übermitteln eines Datenstroms a von einer Sendevorrichtung 1 an eine Empfangsvorrichtung 2 über ein paketbasiertes Netzwerk, insbesondere das Internet 3, umfasst senderseitig und empfängerseitig jeweils eine Vorrichtung 5, 6, zweckmäßigerweise in Form jeweils eines Routers, wobei zur Erhöhung der Datenübertragungsrate und/oder zur Erhöhung der Ausfallsicherheit mehrere Netzwerkzugangsleitungen 4, 4' sender- und/oder empfängerseitig vorgesehen sein können. Die Vorrichtung 6 kann ggf. sich auch im Internet befinden und den zusammengesetzten Datenstrom a' über eine Leitung an die Empfangsvorrichtung 2 übertragen, die dann konventionell ausgestaltet sein kann. Derartige Anordnungen sowie die zugehörigen Übertragungsverfahren sind aus dem US 8,125,989 B2 oder der EP 1 976 202 A2 der Anmelderin bekannt und werden hier nicht weiter beschrieben, sondern durch Inbezugnahme Teil der vorliegenden Offenbarung.

So kann die Sendevorrichtung 1 ein Computer oder ein medizinisches Gerät sein, vgl. Fig. 2, welches in einem Rettungswagen 7 über die erfindungsgemäße Vorrichtung 5, z.B. einen mit mehreren Funknetzen 4 verbundenen Funkrouter, sowie Funkmaste 8 an das Internet angekoppelt und letztlich mit einer Gegenstelle, z.B. einer Telemedizineinrichtung in einer Klinik 9, vorzugsweise ebenfalls über die erfindungsgemäße Vorrichtung 6, z.B. einen Router mit drahtlosen und/oder drahtgebundenen Netzwerkzugangsleitungen, verbunden ist. Ggf. befindet sich die Gegenstelle 6 im Internet und in der Klinik ist ein einfacher Router 2 mit nur einer Internetzugangsleitung 4' vorgesehen.

In der dargestellten Ausführungsform befindet sich am Standort des Nutzers (z.B. im Fahrzeug 7) eine erfindungsgemäße Vorrichtung 5, hier in Form eines Routers (Sendehilfsvorrichtung + Empfangshilfsvorrichtung), an den mehrere drahtlose und/oder drahtgebundene Internet-Zugangsleitungen 4 anliegen (z.B. Mobilfunkmodems). IP-Datenpakete vom und in das Internet werden nicht direkt von der Sendevorrichtung 1 über die angeschlossenen Internet-Zugangsleitungen 4 versendet, sondern stattdessen über die Vorrichtung 5 insbesondere verkapselt vorzugsweise über einen VPN-Tunnel zum Gegenstück 6 der Vorrichtung, das z.B. als Router im Internet (Sendehilfsvorrichtung + Empfangshilfsvorrichtung) ausgestaltet sein kann, bei dem die Pakete ggf. entkapselt und dann an das eigentliche Ziel 6 weitergeleitet werden. Pakete aus dem Internet zum Benutzer wandern ebenfalls zunächst über einen entsprechenden Router, bevor sie zweckmäßigerweise verkapselt zum Router des Benutzers geschickt werden.

Gegenstand der Erfindung ist es nun, dass IP-Datenpakete vom/zum Benutzer in den Sendehilfsvorrichtungen/Empfangshilfsvorrichtungen abhängig von der Anzahl der verfügbaren angeschlossenen Leitungen in mehrere Fragmente zerteilt werden, wobei die Anzahl der Fragmente beispielsweise die Anzahl der aktuell den Qualitätsanforderungen entsprechenden Leitungen minus 1 entspricht, und darüber hinaus mindestens ein weiteres Fragment erzeugt wird, welches Redundanzdaten aus den übrigen Fragmenten enthält, und dieses Fragment dann über die verbleibende Leitung geschickt wird.

Durch diese Vorwärtsfehlerkorrektur lassen sich Übertragungsfehler und Übertragungsverzögerungen drastisch minimieren: Gerade in Mobilfunknetzen hat jedes unterschiedliche Netz insbesondere bei Nutzung in einem sich bewegenden Fahrzeug häufig kurze Aussetzer, weil die Verbindung zu einem Mobilfunkmast oder die Übergabe von einem Mobilfunkmast zum nächsten zu Übertragungsaussetzern führt. Bei Nutzung mehrerer Mobilfunkanbieter erfolgen diese Aussetzer in der Regel aber nicht gleichzeitig, sondern zeitversetzt, da jeder Anbieter einen eigenen Mobilfunkmast hat. Durch die Übermittlung von Redundanzdaten kann die Empfangshilfsvorrichtung sowohl solche Paketverluste ausgleichen, als auch Paketübertragungsverzögerungen verhinden, da auf verzögerte Fragmente in den meisten Fällen nicht mehr gewartet werden muss, sondern das fehlende Fragment aus den Vorwärtsfehlerkorrekturdaten neu erzeugt werden kann.

### System

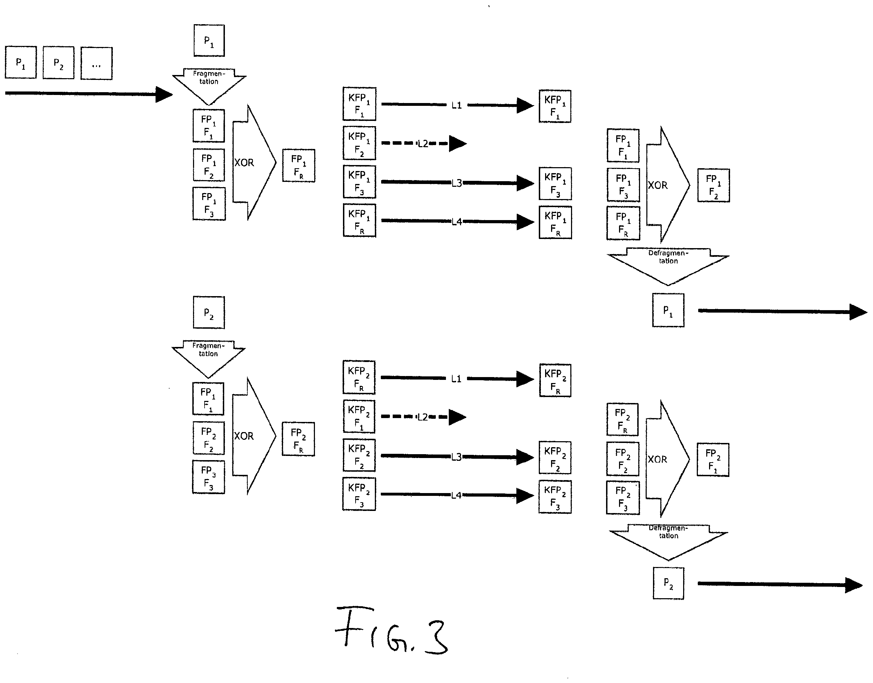

Das erfindungsgemäße System ist zum Durchführen eines Verfahrens wird unter Bezugnahme auf Fig. 3 beschrieben.

Ein IP-Datenpaket P₁ wird vom Absender mit der Zieladresse des Empfängers losgeschickt. Es wird an den Router weitergeleitet, welcher als Sendehilfsvorrichtung dient.

Die Sendehilfsvorrichtung prüft, ob das IP-Datenpaket zu einem bestehenden Verbindungsfluss gehört. Ist dies nicht der Fall, wird eine neue eindeutige Verbindungsflussnummer F₁ erzeugt, und dem IP-Datenpaket zugewiesen. Ist es der Fall, wird dem IP-Datenpaket die bestehende Verbindungsflussnummer zugewiesen.

Anhand in der Sendehilfsvorrichtung hinterlegten Qualitätsregeln ermittelt die Sendehilfsvorrichtung nun, welche der angeschlossenen Internetzugangsmedien in Frage kommt, um dieses Paket zu transportieren. Als Kriterien können unter anderem dienen: Latenz der Leitung (Zeit, die ein Paket benötigt um auf dieser Leitung von der Sendehilfsvorrichtung die Empfangshilfsvorrichtung zu erreichen), Paketverlustrate dieser Leitung zwischen Sendehilfsvorrichtung und Empfangshilfsvorrichtung, Kosten der Datenübertragung auf dieser Leitung, sowie weitere Kriterien.

Nachdem die Sendehilfsvorrichtung ermittelt hat, welche Leitungen für das IP-Datenpaket P₁ genutzt werden können, werden die ermittelten Leitungen in der Liste P₁L gespeichert. Die Anzahl der Einträge dieser Liste wird in NP₁L gespeichert.

Ist der Wert NP₁L = 0 sind aktuell keine Leitungen verfügbar. In diesem Falle wird das IP-Datenpaket entweder verworfen oder für einen späteren Zeitpunkt zwischengespeichert.

Ist der Wert NP₁L = 1, wird das Datenpaket vollständig in das gekapselte Paket KP₁ gespeichert. Das gekapselte Paket erhält in den Kopfdaten der Kapselung eine Markierung, dass es vollständig ist. Ebenso wird die Verbindungsflussnummer gespeichert. Anschließend wird das gekapselte Paket mit der Quell-IP-Adresse der einzigen in P₁L gespeicherten Leitung versehen, und über diese Leitung an die Ziel-IP-Addresse der Empfangshilfsvorrichtung gesendet.

Im folgenden wird hingegen davon ausgegangen, dass beispielhaft NP₁L = 6 ist, also mehr als eine Leitung zur Übertragung zur Verfügung steht und den Qualitätsanforderungen entspricht.

### Fragmentierung der Datenpakete

Ist der Wert NP₁L > 2, ist das Datenpaket P₁ in NP₁L - 1 Teile gleicher Größe zu fragmentieren. Um dies zu tun, wird zunächst die zu erwartende Größe der Fragmente ermittelt. Bei einer Größe von P₁ von 1452 Byte ergäben sich bei einer Teilung durch NP₁L - 1 = 5 290,4 Byte. Dieser Größenwert wird aufgerundet auf den nächsten durch 4 teilbaren Wert, in diesem Falle also 292 Byte.

Anschließend werden nun hier 5 Fragmentpakete zu 292 Byte erzeugt. Das Fragmentpaket 1 (FP₁F₁) enthält die Bytes 1-292 des Datenpakets P₁, das Fragmentpaket 2 (FP₁F₂) enthält die Bytes 293-584, und so weiter. Für das letzte Fragmentpaket FP₁F₅ stehen somit nur noch 284 Bytes aus dem Paket P1 zur Verfügung. Die fehlenden 8 Bytes in FP₁F₅ werden mit 0-Bytes aufgefüllt.

### Ausnahme: Erstes Paket eines neuen Verbindungsflusses

Sollte es sich um das erste Paket (P₁) einer neuen Verbindungsflussnummer handeln, wird bei der Teilung darauf geachtet, dass die Größe der Fragmente mindestens so groß ist, dass das erste Fragment die vollständigen Kopfdaten (IP-Kopfdaten und ggf. UDP- oder TCP-Kopfdaten) des IP-Datenpakets P₁ enthält. In der Praxis müssen die Fragmente des ersten IP-Datenpakets einer Verbindungsflussnummer somit mindestens 40 Bytes in der Größe haben. Ist die Paketgröße von P₁ geteilt durch NP₁L - 1 < 40, wird daher nun in Paketgröße / 40 Fragmente aufgeteilt. Bleibt bei der Division ein Rest, wird in (Paketgröße / 40) + 1 Fragmente aufgeteilt. Das letzte Fragment enthält dann wiederum am Ende 0-Bytes als Fülldaten. Dieses Vorgehen stellt sicher, dass die Empfangshilfsvorrichtung zum Zeitpunkt des Erhalts des Fragments P₁F₁ in der Lage ist, der mitübertragenen Verbindungsflussnummer F₁ die Ziel-Addressinformationen des ursprünglichen IP-Pakets zuzuordnen.

### Berechnung der Redundanzinformation

Die Sendehilfsvorrichtung verfügt somit nun über die Fragmentpakete FP₁F₁ bis FP₁F₅. Zusätzlich wird nun ein Fragmentredundanzpaket FP₁F_{R} mit gleicher Länger wie die Fragmentpakete FP₁F₁ bis FP₁F₅ erzeugt. Dieses Fragmentredundanzpaket wird mit Redundanzdaten gefüllt, welche aus FP₁F₁ bis FP₁F₅ errechnet werden. Zu diesem Zwecke wird gemäß eines bevorzugten Verfahrens das erste Byte aus FP₁F₁ per exklusiv- ODER (XOR) mit dem ersten Byte aus FP₁F₂ verknüpft. Das Ergebnis wird dann wiederum per exklusiv-ODER (XOR) mit dem ersten Byte aus FP₁F₃ verknüpft, dieses Ergebnis mit FP₁F₄, dieses Ergebnis mit FP₁F₄. Das Ergebnis wird nun als erstes Byte vom Fragmentredundanzpaket FP₁F_{R} gespeichert. Mit den übrigen 291 Byte wird genauso vorgegangen.

Im Ergebnis enthält das Fragmentredundanzpaket FP₁F_{R} somit das Ergebnis aller XOR-Verknüpfungen aller Bytes der Fragmentpakete FP₁F₁ bis FP₁F₅.

### Optionale Berechnung der doppelten Redundanzinformation

Sollte aufgrund einer hohen Paketverlustrate auf mehr als einer der verwendeten Leitungen die Erzeugung einer einfachen Redundanz nicht ausreichen, um sicherzustellen dass die Empfangshilfsvorrichtung die ursprünglichen Daten auch bei Paketverlusten wiederherstellen kann, kann die Sendehilfsvorrichtung entscheiden, eine doppelte Redundanzinformation zu berechnen. Dies ist möglich und sinnvoll, wenn mindestens 4 Leitungen zur Verfügung stehen, also NP₁L > 3 ist. In diesem Falle werden nun nur NP₁L - 2 Fragmente des Datenpakets P₁ erzeugt. Das erste Fragmentredundanzpaket FP₁F_{R} wird anschließend wie vorstehend per XOR-Verknüpfung erzeugt. Ein zweites Fragmentredundanzpaket FP₁F_{R2} wird auf Basis von Galois-Feld-Multiplikationen erzeugt. Dieses Verfahren ist aus der redundanten Speicherung auf Datenträgen bekannt (z.B. Patent DE 19922253 A1), wird hiermit aber erstmals zur Nutzung bei der Echtzeit-Datenübertragung von IP-Daten beschrieben. Ggf. werden drei oder mehr Fragmentredundanzpakete erzeugt.

Die weiteren Ausführungen beziehen sich auf die Übertragung von einfacher Redundanzinformation, sind bei Nutzung mehrfacher, insbesondere doppelter, Redundanzinformation analog anzuwenden.

### Kapselung und Versand der Fragmentpakete

Jedes Fragmentpaket FP₁ wird nun in ein neues IP-Datenpaket KFP₁ gekapselt. In den Kopf des gekapselten Pakets wird die IP-Quelladdresse der entsprechenden Leitung der Sendehilfsvorrichtung sowie die Ziel-IP-Addresse der Empfangshilfsvorrichtung gespeichert. Ebenfalls gespeichert wird die Verbindungsflussnummer F₁, die Gesamtanzahl der Fragmente NP₁L - 1, sowie die Fragmentpaketnummer FP₁F*n*. Anschließend wird jedes Paket KFP₁F*n* über die zugehörige Leitung Ln versendet.

Das Fragmentredundanzpaket FP₁F_{R} wird gekapselt in KFP₁F_{R}. In den Kopf des gekapselten Pakets wird die IP-Quelladdresse der Leitung NP₁L₆ der Sendehilfsvorrichtung sowie die Ziel-IP-Addresse der Empfangshilfsvorrichtung gespeichert. Ebenfalls gespeichert wird die Verbindungsflussnummer F₁, die Gesamtanzahl der Fragmente NP₁L-1, sowie eine Markierung, dass es sich um ein Fragmentredundanzpaket handelt. Dies geschieht durch Nutzung einer reservierten Zahl im Feld der Fragmentpaketnummer. Das gekapselte Fragmentredundanzpaket KFP₁F_{R} wird anschließend über die Leitung NP₁L₆ versendet.

Bei Nutzung doppelter Redundanzinformation wird entsprechend vorgegangen - hier werden die Fragmentpakete FP₁ bis FP₄ über die Leitungen L₁ bis L₄ versendet, das erste Fragmentredundanzpaket FP₁F_{R} über die Leitung L₅, das zweite Fragmentredundanzpaket FP₁F_{R2} über die Leitung L₆.

### Fehlsortierung und optionale spekulative Neuübertragung von Fragmentpaketen

Aufgrund der unterschiedlichen Laufzeiten der gekapselten Fragmentpakete auf den Leitungen beziehungsweise der dahintergeschalteten Infrastruktur der Netzbetreiber werden die Fragmentpakete die Empfangshilfsvorrichtung nicht in der Reihenfolge erreichen, in der sie abgesendet wurden. Es können nicht nur die einzelnen Fragmente in falsche Reihenfolge ankommen (z.B. KFP₁F₃, KFP₁F₂, KFP₁F₄, KFP₁F_{R}, KFP₁F₄, KFP₁F₁), auch die eigentlichen Paketnummern können durch Überholungen in der falschen Reihenfolge ankommen (z.B. KFP₂F_{1,} KFP₁F₂, KFP₂F₅, KFP₁F₄...).

Wie im weiteren ausgeführt, ist durch das beschriebene Verfahren ein nicht behebbarer Verlust von Paketen sehr unwahrscheinlich, im Regelfalle können Pakete aufgrund der Fragmentierung nebst Vorwärtsfehlerkorrektur bei der Empfangshilfsvorrichtung wiederhergestellt werden. Damit aber auch der Fall abgedeckt ist, in dem gleichzeitig auf mehreren Leitungen Paketverluste in der Art auftreten, dass in der Empfangshilfsvorrichtung eine Wiederherstellung unmöglich ist, wird zusätzlich mit einer Heuristik das Verhalten der Leitung überprüft. Sollte sich unmittelbar (innerhalb der Roundtrip-Zeit der Verbindung zwischen Sendehilfsvorrichtung und Empfangshilfsvorrichtung) nach Versenden der Fragmente auf mehr als einer der genutzten Leitung die Leitung so verschlechtert haben, dass sie die Qualitätsanforderungen des Verbindungsflusses nicht mehr erfüllt (z.B. Erhöhung der Latenz, komplette Verbindungsabbruch), werden die betroffenen Fragmente in einer spekulativen Neuübertragung über eine den Qualitätsanforderungen entsprechende Leitung neu übertragen.

### Die Empfangshilfsvorrichtung

In der Empfangshilfsvorrichtung (die hier beschriebene Ausführungsform ist nicht Gegenstand der Ansprüche) werden zwei Listen geführt: Die Liste der bekannte Verbindungsflüssen BVF, und die Liste der unbekannten Verbindungsflüssen UVF. Trifft ein neues gekapseltes Fragmentpaket KFP bei der Empfangshilfsvorrichtung ein, wird dieses entkapselt und in der Kopfinformation des Pakets zunächst geprüft, ob die Verbindungsflussnummer sich in der Liste der bekannten Verbindungsflüsse BVF befindet. Ist dies nicht der Fall, wird geprüft, ob es sich um das erste Fragment des ersten Pakets dieser Verbindung handelt, also um FP₁F₁. Ist dies der Fall, wird ein neuer Eintrag in BVF erzeugt, und diesem Eintrag ein neu erzeugter Neusortierungsheap NSH beigefügt. Diesem Neusortierungsheap wird das Paket FP₁F₁ übergeben. Zudem wird nun geprüft, ob in der Liste unbekannter Verbindungsflüssen UVF sich weitere Pakete dieses Verbindungsflusses befinden, also in der Reihenfolge spätere Pakete, die aber bereits vor FP₁F₁ angekommen sind. Ist dies der Fall, werden die dort enthaltenen Pakete an den Neusortierungheaps in BVF übertragen, und der Eintrag in UVF gelöscht.

Handelt es sich bei dem eingegangenen Paket um eines, dessen Verbindungsflussnummer nicht in der Liste der bekannten Verbindungsflüsse BVF auftaucht, und handelt es sich nicht um das erste Fragment des ersten Pakets (FP₁F₁) dieses Verbindungsflusses, wird geprüft ob die Verbindungsflussnummer in der Liste der unbekannten Verbindungsflüssen UVF auftaucht. Ist dies der Fall, wird das Paket dort hinzugefügt. Ist dies nicht der Fall, wird ein Eintrag in der Liste der unbekannten Verbindungsflüssen UVF erzeugt und das Paket hinzugefügt.

Handels es bei dem eingangenen Paket um eines, dessen Verbindungsflussnummer in der Liste der bekannten Verbindungflüsse BVF auftaucht, wird das Paket dem Neusortierungheap HSP des Listeneintrages in BVF hinzugefügt.

### Der Neusortierungsheap - Eingabe

Werden Daten an den Neusortierungsheap (die hier beschriebene Ausführungsform ist nicht Gegenstand der Ansprüche) übergeben, wird zunächst geprüft ob es sich um ein vollständiges Paket oder um ein Fragment handelt. Handelt es sich um ein vollständiges Paket, so wird geprüft ob die Sequenznummer des Paketes innerhalb des erwartenden Bereichs liegt (es sich also nicht um ein verspätetes Duplikat handelt) und dann in den Neusortierungsheap einsortiert. Zudem wird die Sequenznummer des Pakets in einer Hashtable als vorhanden markiert.

Handelt es sich nicht um ein vollständiges Paket, sondern um ein Fragment, wird zunächst geprüft, ob für die Sequenznummer des fragmentierten Pakets bereits eine Fragmentkarte existiert. Ist das nicht der Fall, wird eine neue Fragmentkarte angelegt. Basierend auf den Kopfdaten des Fragmentpakets werden die Felder der Anzahl der Fragmente für diese Sequenznummer in die Karte eingetragen, sowie die Nutzdaten dieses Paket kopiert. Handelt es sich um ein Fragmentredundanzpaket, werden die Daten stattdessen in ein gesondertes Datenfeld für Paritätsinformationen innerhalb der Fragmentkarte gespeichert.

Sollte die Anzahl der in die Karte eingetragenen Fragmente nun der Gesamtanzahl der Fragmente dieser Sequenznummer entsprechen, wird das nunmehr vollständige Paket in den Neusortierungsheap einsortiert und die Sequenznummer in der Hashtable als vorhanden markiert.

Entspricht die Anzahl der in der Karte eingetragenen Fragmente der Gesamtanzahl der Fragmente minus 1, fehlt also nur noch ein einziges Fragment, und wurden bereits Paritätsdaten (also ein Fragmentredundanzpaket) empfangen, wird mithilfe der Paritätsdaten das fehlende Fragment wiederhergestellt. Zu diesem Zwecke werden alle vorhanden Fragmente nacheinander mit dem Inhalt des Paritäts-Datenfelders der Fragmentkarte XOR-verknüpft. Das Ergebnis im Paritäts-Datenfeld wird dann an die Stelle des fehlenden Fragments kopiert. Das nunmehr vollständige Paket wird in den Neusortierungsheap einsortiert und die Sequenznummer in der Hashtable als vorhanden markiert.

Im Falle von doppelter Redundanzinformation kann das ursprüngliche Paket bereits wieder erzeugt werden, sobald n - 2 Fragmente bei der Empfangshilfsvorrichtung angekommen sind.

### Der Neusortierungsheap - Ausgabe

Der Neusortierungsheap (die hier beschriebene Ausführungsform ist nicht Gegenstand der Ansprüche) speichert die nächste auszugebende Paket-Sequenznummer. Bei Erzeugung des Heaps hat diese den Wert 1. Die Empfangshilfsvorrichtung prüft nach jedem Eingang in den Neusortierungsheap, ob nunmehr eine Ausgabe möglich ist. Aufgrund der Eigenschaften des Binary Heap ist sichergestellt, dass die im Neusortierungsheap enthaltenen Daten richtig (aufsteigend) sortiert sind, allerdings können durch noch nicht eingetroffene Pakete Lücken vorhanden sein. Die Ausgabefunktion des Neusortierungsheaps prüft daher, ob die Sequenznummer des ersten vorhandenen Pakets der erwarteten nächsten Sequenznummer entspricht. Ist dies der Fall, wird das Paket ausgegeben, und die erwartete nächste Sequenznummer um eins erhöht, ist dies nicht der Fall, wird kein Paket ausgegeben.

### Optionale Zustellungssignalisierung und Neuübertragung (die hier beschriebene Ausführungsform ist nicht Gegenstand der Ansprüche)

Aufgrund der beschriebenen Erfindung werden im Regelfalle selbst bei stark gestörten Leitungen die Nutzdaten mittels Vorwärtsfehlerkorrektur zeitnah an der Empfangshilfsvorrichtung bereitgestellt werden können. Im Falle einer gleichzeitigen plötzlichen Störung mehrerer Leitungen, die von der Sendehilfsvorrichtung nicht durch historisches Verhalten vorhergesehen werden konnte, kann es dennoch passieren dass ein oder mehrere Paketfragmente die Empfangshilfsvorrichtung nicht oder nur stark verzögert erreichen würde. In diesem Falle müsste im beschriebenen Verhalten die Empfangshilfsvorrichtung so lange warten, bis das fehlende Fragment angekommen ist. Um dies zu Vermeiden, ermittelt die Empfangshilfsvorrichtung laufend die durchschnittliche Zeit, die zwischen dem Empfangen des ersten und letzten Fragments eines Paktes verstreicht. Diese Zeit sollte im Regelfall die Differenz der kleinsten und größten Latenz der zwischen Sendehilfsvorrichtung und Empfangshilfsvorrichtung für diesen Verbindungsfluss entsprechen. Wird beim Neusortieren im Neusortierungsheap nun innerhalb diese statistisch erwarte Verzögerung deutlich überschritten, muss vom Verlust oder einer deutlichen Verzögerung eines der Fragmentpakete ausgegangen werden.

Um diesem Fall zu begegnen, sind auf Basis von Benutzerwahl im Rahmen der Servicequalitäteinstellungen zwei verschiedene Vorgehensweisen möglich:

### a) Überspringen von fehlenden Paketen

Kann der Neusortierungsheap nicht rechtzeitig einen lückenlosen Verbindungsfluss wiederherstellen , so werden die fehlenden Pakete ausgelassen. Das Problem der fehlenden Nutzdatenpakete wird somit höheren Übertragungsschichten, also z.B. TCP oder UDP, überlassen. Der Verbindungsfluss aus Nutzerdaten wird in diesem Falle zwar in seltenen Fällen lücken haben, dafür aber mit gleichmäßiger Verzögerung beim Endempfänger eintreffen. Dies ist beispielsweise für Dienste wie Telefonie oder Videokonferenzen erwünscht.

### b) Neuübertragung von fehlenden Paketen

Ist die entsprechende Benutzeroption gewählt, so teilt die Empfangshilfsvorrichtung der Sendehilfsvorrichtung für jeden Verbindungsfluss zyklisch mit, welche Fragmentpakete bei der Empfangshilfsvorrichtung eingegangen sind. Analog der beschriebenen Analyse auf Basis der Paketlaufzeiten (Latenzen) der einzelnen Leitungen ist es nunmehr die Sendehilfsvorrichtung, die aufgrund fehlender Bestätigung frühzeitig erkennt, wenn nicht alle Fragmentpakete im Rahmen des erwarteten Zeitfensters bei der Empfangshilfsvorrichtung angekommen sind. In diesem Falle sendet die Sendehilfsvorrichtung spekulativ Paketfragmente erneut über eine andere als zuvor für dieses Fragment verwendete Leitung.

Zwischen Sendehilfsvorrichtung und Empfangshilfsvorrichtung können die übertragenen Fragmentpakete komprimiert und/oder verschlüsselt werden. Je nach verwendeten Komprimierungs- und Verschlüsselungsverfahren kann es sein, dass einige Datenpakete für die Empfangshilfsvorrichtung unverzichtbar sind, der Datenstrom also nicht weiter wiederhergestellt werden könnte, wenn ein solches Paket fehlen würde. In diesem Falle kann auch bei einer Benutzerentscheidung zur Variante a) die Sendehilfsvorrichtung solche unverzichtbaren Pakete im Kopffeld gesondert markieren. In diesem Falle wird die Empfangshilfsvorrichtung an die Sendehilfsvorrichtung auch nur den Erhalt solcher unverzichtbarer Pakete beziehungsweise deren Fragmente signalisieren, und die Sendehilfsvorrichtung gemäß b) nur solche Pakete übertragen. Für alle verzichtbaren Pakete wird hingegen gemäß a) vorgegangen, das heißt die Empfangshilfsvorrichtung wird Lücken im Datenstrom akzeptieren, um Verzögerungen im Verbindungsfluss zu vermeiden.

### Weiterleitung der Pakete an das eigentliche Ziel

An der Empfangshilfsvorrichtung ist nunmehr ein Verbindungsfluss erzeugt, der dem Eingabedatenstrom am der Sendehilfsvorrichtung exakt entspricht. Sobald das erste Fragmentpaket FP₁F₁ die Empfangshilfsvorrichtung erreicht hat, sind die ursprünglichen Kopfinformationen des IP-Pakets wieder verfügbar, so dass für den Datenstrom nunmehr IP-basiertes Routing durchgeführt werden kann. Gemäß konfigurierten Routingprotokollen kann der Verbindungsfluss nun also als gewöhnlicher IP-Datenstrom behandelt und an das eigentliche Ziel weitergeleitet werden.

### Bidirektionale Datenflüsse

In der Sendehilfsvorrichtung ist parallel eine Empfangshilfsvorrichtung implementiert, in der Empfangshilfsvorrichtung eine Sendehilfsvorrichtung. Für einen bi-direktionalen Nutzdatenstrom wird also in Gegenrichtung die Empfangshilfsvorrichtung nunmehr zur Sendehilfsvorrichtung, und die Sendehilfsvorrichtung zur Empfangshilfsvorrichtung. Die Hin- und Rückrichtung eines Verbindungsflusses kann dabei unabhängig voneinander gehandhabt werden. Möglich ist aber auch, dass Sendehilfsvorrichtung und Empfangshilfsvorrichtung die Vor- und Rückflüsse des Verbindungsflusses automatisch zuordnen und anschließend Bündelungsparameter für beide Richtungen geteilt nutzen.

## Patentansprüche

1. Vorrichtung (5), insbesondere Router, zum Bündeln mehrerer Zugangsleitungen zu einer virtuellen Zugangsleitung zwecks Bereitstellung der Summe der Bandbreiten der mehreren Zugangsleitungen (4) für eine Datenübertragung, über die virtuelle Zugangsleitung, wobei die Vorrichtung (5) dazu ausgestaltet ist, ein zu übertragendes Datenpaket auf mehrere Datenpakete zur separaten Übertragung über die mehreren Zugangsleitungen (4) aufzuteilen, wobei die Vorrichtung zum Berechnen und Mitübertragen von Redundanzinformationen ausgestaltet ist, aus denen verlorene Datenpakete wiederherstellbar sind, so dass Paketverluste auf einer Zugangsleitung (4) nicht zu Paketverlusten auf der gebündelten virtuellen Zugangsleitung führen, **dadurch gekennzeichnet, dass** die Datenübertragung im Internet Protokoll Format (IP) erfolgt, die Zugangsleitungen Internetzugangsleitungen (4) sind und die Vorrichtung dazu ausgestaltet ist, für die Auswahl der Leitungen und die Menge der zu übertragenden Redundanzinformation die jeweils aktuellen Qualitätseigenschaften der einzelnen Leitungen heranzuziehen.

2. Vorrichtung nach Anspruch 1, so ausgestaltet, dass Paketverluste auf den physikalischen Leitungen dadurch ausglichen werden, dass auf den nicht von Paketverlusten betroffenen Leitungen vorab Redundanzinformationen übertragen wurden, so dass empfangsseitig die ursprünglichen Daten vollständig wiederhergestellt werden können.

3. Vorrichtung nach Anspruch 1 oder 2, so ausgestaltet, dass die Redundanzinformationen durch verteilte Paritätsinformation auf Basis einer XOR-Verknüpfung der Nutzdaten erzeugt werden, und/oder dass die Redundanzinformationen durch verteilte doppelte Paritätsinformationen auf Basis von Galois-Feld-Multiplikationen erzeugt werden.

4. Vorrichtung nach einem der Ansprüche 1 bis 3, so ausgestaltet, dass die Redundanzinformationen paketweise erzeugt und übertragen werden und/oder dass die Redundanzinformationen sub-paketweise erzeugt und übertragen werden, ein Datenpaket also in mehrere Fragmente aufgeteilt wird, und zusätzliche Fragmente die Redundanzinformation tragen.

5. Vorrichtung nach Anspruch 1, so ausgestaltet, dass bei nachträglicher negativer Veränderung der Qualitätseigenschaften der Leitung bereits versendeter aber noch nicht angekommener Daten diese spekulativ über eine weiterhin den Qualitätsanforderungen entsprechenden Leitung neu übertragen werden.

6. Vorrichtung nach einem der Ansprüche 1 bis 5, so ausgestaltet, dass die Vorrichtung auf Basis des historischen Verhaltens der Leitungen automatisch künftiges Paketverlustverhalten von Leitungen prognostiziert, und darauf basiert selbsttätig entscheidet, welches Maß an Redundanzinformationen übertragen werden müssen, um keine Paketverluste bei den übertragenen Nutzdaten zu erleiden.

7. Anordnung zur Internet-Datenübertragung über mehrere einzelne Datenübertragungsleitungen (4, 4'), umfassend eine Sendehilfsvorrichtung (5), nämlich eine Vorrichtung nach einem der Ansprüche 1 bis 6, die über mehrere einzelne Datenübertragungsleitungen (4) an das Internet (3) angeschlossen ist, sowie eine Empfangshilfsvorrichtung (6), die über mehrere einzelne Datenübertragungsleitungen (4') an das Internet angeschlossen ist.

8. Anordnung nach Anspruch 7, so ausgestaltet, dass Datenpakete zwischen Sendehilfsvorrichtung und Empfangshilfsvorrichtung komprimiert und/oder verschlüsselt übertragen werden, und die Sendehilfsvorrichtung Pakete markiert, die für ein fortgesetztes Wiederherstellen des Datenstroms in der Empfangshilfsvorrichtung zwangsweise notwendig sind, die Empfangshilfsvorrichtung der Sendehilfsvorrichtung nur diese als unverzichtbar markierten Pakete beim Empfang der Sendehilfsvorrichtung bestätigt, und die Sendehilfsvorrichtung aufgrund einer Prognose noch nicht als empfangen bestätigte Pakete spekulativ neu überträgt.

9. Anordnung nach Anspruch 7 oder 8, so ausgestaltet, dass die Sendehilfsvorrichtung (5) an n einzelne Datenübertragungsleitungen koppelbar ist, wobei n > 1, **dadurch gekennzeichnet, dass** die Sendehilfsvorrichtung (5) zum Aufteilen eines zu sendenden Datenpakets auf n-m Datenpakete sowie zum Berechnen von m Datenpakten mit Redundanzinformation ausgestaltet ist, wobei m < n.

10. Anordnung nach Anspruch 9, so ausgestaltet, dass jedes virtuelle Datenpaket auf n-1 Datenpakete aufgeteilt wird, ein Datenpaket mit Redundanzinformationen betreffend die n-1 Datenpakete berechnet wird, und die insgesamt n Datenpakete über die n einzelnen Datenübertragungsleitungen versandt werden.

11. Anordnung nach Anspruch 9, so ausgestaltet, dass jedes virtuelle Datenpaket auf n-2 Datenpakete aufgeteilt wird und zwei Datenpakete mit Redundanzinformationen betreffend die n-2 Datenpakete berechnet werden, und die insgesamt n Datenpakete über die n einzelnen Datenübertragungsleitungen versandt werden.

12. Anordnung nach einem der Ansprüche 7 bis 11, so ausgestaltet, dass die Empfangshilfsvorrichtung (6) an mehrere einzelne Datenübertragungsleitungen koppelbar ist und die Empfangshilfsvorrichtung (6) zum Empfangen mehrerer Datenpakete einschließlich wenigstens eines Datenpakets mit Redundanzinformation und zum Wiederherstellen von verlorenen Datenpaketen aus empfangenen Datenpaketen mittels der Redundanzinformation(en) ausgestaltet ist.

## Claims

1. A device (5), in particular router, for bundling a plurality of access lines to form a virtual access line for the purpose of providing the sum of bandwidths of the plurality of access lines (4) for a data transfer over the virtual access line, wherein the device (5) is designed to split a data packet to be transferred for the separate transfer over the plurality of access lines (4),
wherein the device is designed for calculating and co-transferring redundancy information, from which lost data packets can be recovered, so that packet losses on an access line (4) do not lead to packet losses on the bundled virtual access line,
**characterised in that** data transfer is carried out in the internet protocol format (IP), the access lines are internet access lines (4) and the device is designed to use the respectively current quality characteristics of the individual lines for the selection of the lines and the quantity of the redundancy information to be transferred.

2. The device according to claim 1, designed in such a way that packet losses on the physical lines are compensated for in that redundancy information was transferred in advance on the lines not affected by packet losses, so that the original data can be completely recovered on the receiving side.

3. The device according to claim 1 or 2, designed in such a way that the redundancy information is generated by means of distributed parity information on the basis of an XOR link of the useful data, and/or in that the redundancy information is generated by means of distributed duplicate parity information on the basis of Galois-field-multiplications.

4. The device according to one of claims 1 to 3, designed in such a way that the redundancy information is generated and transferred packet by packet and/or in that the redundancy information is generated and transferred sub-packet by sub-packet, i.e. one data packet is split into a number of fragments and additional fragments carry the redundancy information.

5. The device according to claim 1, designed in such a way that, in case of a subsequent negative change of the quality characteristics of the line of already dispatched but not yet arrived data, these are transferred anew speculatively over a line furthermore corresponding to the quality characteristics.

6. The device according to one of claims 1 to 5, designed in such a way that the device, on the basis of the historic behaviour of the lines, automatically forecasts future packet loss behaviour of lines and based thereon automatically decides to what extent redundancy information has to be transferred in order not to suffer any packet losses in the transferred useful data.

7. An arrangement for internet data transfer over a plurality of individual data transfer lines (4, 4'), including a sending auxiliary device (5), i.e. a device according to one of claims 1 to 6, which is connected to the internet (3) via a plurality of individual data transfer lines (4), as well as a receiving auxiliary device (6), which is connected to the internet via a plurality of individual data transfer lines (4').

8. The arrangement according to claim 7, designed in such a way that data packets are transferred between the sending auxiliary device and the receiving auxiliary device in a compressed and/or encrypted manner, and the sending auxiliary device marks packets which are necessary under any circumstances for continuous recovery of the data stream in the receiving auxiliary device, the receiving auxiliary device confirms to the sending auxiliary device only those packets marked as indispensable, and the sending auxiliary device, on the basis of a forecast, transfers again speculatively packets not yet confirmed as received.

9. The arrangement according to claim 7 or 8, designed in such a way that the sending auxiliary device (5) can be coupled to n individual data transfer lines, wherein n > 1, **characterised in that** the sending auxiliary device (5) is designed for splitting a data packet to be sent into n-m data packets and for calculating m data packets with redundancy information, wherein m < n.

10. The arrangement according to claim 9, designed in such a way that each virtual data packet is split into n-1 data packets, one data packet with redundancy information concerning the n-1 data packets is calculated and the total of n data packets is sent over the n individual data transfer lines.

11. The arrangement according to claim 9, designed in such a way that each virtual data packet is split into n-2 data packets and two data packets with redundancy information concerning the n-2 data packets are calculated, and the total of n data packets is sent over the n individual data transfer lines.

12. The arrangement according to one of claims 7 to 11, designed in such a way that the receiving auxiliary device (6) can be coupled to a plurality of individual data transfer lines, and the receiving auxiliary device (6) is designed for receiving a plurality of data packets including at least one data packet with redundancy information and for recovering lost data packets from received data packets by means of the redundancy information.

## Revendications

1. Dispositif (5), notamment routeur, pour regrouper plusieurs lignes d'accès pour former une ligne d'accès virtuelle dans le but de fournir la somme des bandes passantes de plusieurs lignes d'accès (4) pour la transmission de données via la ligne d'accès virtuelle, dans lequel le dispositif (5) est configuré pour diviser le paquet de données transmis en une pluralité de paquets de données en vue d'une une transmission séparée sur la pluralité de lignes d'accès (4), dans lequel le dispositif est configuré pour calculer et également transmettre des informations de redondance, d'après lesquelles des paquets de données perdus peuvent être restaurée, de sorte que les pertes de paquets sur une ligne d'accès (4) n'entraînent pas de perte de paquets sur la ligne d'accès virtuelle groupée, **caractérisé en ce que** la transmission de données s'effectue au format de protocole Internet (IP), les lignes d'accès sont des lignes d'accès Internet (4) et le dispositif est conçu, pour la sélection des lignes et la quantité d'informations de redondance à transmettre, de définir les caractéristiques de qualité actuelles respectives des lignes individuelles.

2. Dispositif selon la revendication 1, configuré de manière à compenser les pertes de paquets sur les lignes physiques par des informations de redondance transmises à l'avance sur les lignes non affectées par la perte de paquets, de sorte que les données d'origine puissent être complètement restaurées à l'extrémité réceptrice.

3. Dispositif selon la revendication 1 ou 2, configuré de manière à générer des informations de redondance par des informations de parité distribuées sur la base d'une opération XOR des données d'utilisateur, et/ou à générer les informations de redondance par des informations de double parité distribuées basées sur des multiplications de champs de Galois.

4. Dispositif selon une des revendications 1 à 3, configuré de manière à générer et transmettre en paquets les informations de redondance et/ou générer et transmettre en sous-paquets les informations de redondance, c'est-à-dire qu'un paquet de données est divisé en plusieurs fragments, et que des fragments supplémentaires transportent les informations de redondance.

5. Dispositif selon la revendication 1, configuré de manière à, après une modification négative des propriétés de qualité de la ligne, retransmettre les données qui ont déjà été envoyées mais qui ne sont pas encore arrivées de manière spéculative via une ligne qui continue de répondre aux exigences de qualité.

6. Dispositif selon une des revendications 1 à 5, configuré de manière à prédire automatiquement le comportement futur de perte de paquets des lignes sur la base du comportement historique des lignes, et sur cette base décider automatiquement quel niveau d'informations de redondance doit être transmis afin de ne subir aucune perte de paquets dans les données d'utilisateur transmises.

7. Agencement de transmission de données Internet via plusieurs lignes de transmission de données individuelles (4, 4), comprenant un dispositif de transmission auxiliaire (5), à savoir un dispositif selon une des revendications 1 à 6, qui est connecté à Internet (3) via plusieurs lignes de transmission de données individuelles (4) et un dispositif de réception auxiliaire (6) qui est connecté à Internet via plusieurs lignes de transmission de données individuelles (4').

8. Agencement selon la revendication 7, configuré de manière à compresser et/ou crypter entre le dispositif de transmission auxiliaire et le dispositif de réception auxiliaire, et marquer par le dispositif de transmission auxiliaire les paquets qui sont absolument nécessaires pour la restauration continue du flux de données dans le dispositif de transmission auxiliaire, le dispositif de réception auxiliaire du dispositif de transmission auxiliaire confirme uniquement ces paquets marqués comme essentiels lors de la réception du dispositif de transmission auxiliaire, et le dispositif de transmission auxiliaire retransmet de manière spéculative les paquets non encore reçus comme confirmés en raison de la prévision.

9. Agencement selon la revendication 7 ou 8 configuré de manière que le dispositif de transmission auxiliaire (5) puisse être couplé à n lignes de transmission de données individuelles, dans lequel n > 1, **caractérisé en ce que** le dispositif de transmission auxiliaire (5) est configuré pour diviser un paquet de données à envoyer en n-m paquets de données et est conçu pour calculer m paquets de données avec des informations de redondance, où m < n.

10. Agencement selon la revendication 9, configuré de manière que chaque virtuel paquet de données soit divisé en n-1 paquets de données, un paquet de données avec des informations de redondance relatives aux n-1 paquets de données est calculé, et le total de n paquets de données est envoyé sur les n lignes de transmission de données individuelles.

11. Agencement selon la revendication 9, configuré de manière que chaque paquet de données virtuel soit divisé en n-2 paquets de données et deux paquets de données avec des informations de redondance relatives aux n-2 paquets de données sont calculés, et le total de n paquets de données est envoyé sur les n lignes de transmission de données individuelles.

12. Agencement conçu selon une quelconque des revendications 7 à 11, configuré de manière que le dispositif de réception auxiliaire (6) puisse être couplé à une pluralité de lignes de transmission de données individuelles et le dispositif de réception auxiliaire (6) soit conçu pour recevoir une pluralité de paquets de données comprenant au moins un paquet de données avec des informations de redondance et pour restaurer les paquets de données perdus à partir des paquets de données reçus à l'aide de la ou des informations de redondance.
